# EUROPÄISCHE PATENTANMELDUNG

(11) **EP 0 836 088 A2**
(43) Veröffentlichungstag der Anmeldung: **15.04.1998**
(21) Anmeldenummer: 97117600.3
(22) Anmeldetag: 10.10.1997
(51) Int. Cl.: G01M 3/04

(54) **Verfahren und Einrichtung zum Prüfen der Dichtigkeit von Fugen an Betonbauwerken**

(30) Priorität: 12.10.1996 DE 19642136
(71) Anmelder: TÜV Bau- und Betriebstechnik GmbH, 80686 München (DE)
(72) Erfinder: Thoma, Wolfgang, Dipl.-Ing., 70794 Filderstadt (DE)
(74) Vertreter: Dreiss, Fuhlendorf, Steimle & Becker, Patentanwälte

(57) **Zusammenfassung**

Bei einem Verfahren zum Überwachen der Dichtigkeit von Fugen an Bauwerken, wie Gebäude, Brücken, Becken und dergleichen, welche Fugen im Bereich der Bauwerksaußen- bzw. -oberfläche mit einem ersten Dichtmaterial ausgefüllt oder mit einem die Fuge und das erste Dichtmaterial überbrückenden zweiten Dichtmaterial saniert sind wird die unterhalb des ersten oder zweiten Dichtmaterials mit einem perforierten Röhrchen versehene Fuge längs ihres zu überwachenden Abschnitts von einer Messkammer überdeckt, danach durch das perforierte Röhrchen ein Prüfgas nahezu drucklos geführt und in der zur Fuge hin offenen Messkammer eine Prüfgas-Permeationsanalyse durchgeführt. Dadurch kann vor dem Sanieren einer Fugenabdichtung oder vor dem erneuten Sanieren einer bereits sanierten Fugenabdichtung eine Entscheidung über die Sanierungsnotwendigkeit getroffen werden.

## Beschreibung

Die vorliegende Erfindung bezieht sich auf ein Verfahren und eine Einrichtung zum Prüfen bzw. Überwachen bzw. zur Alterungsverfolgung der Dichtigkeit von Fugen an Bauwerken, wie Gebäude, Brücken, Becken und dergleichen nach dem Oberbegriff des Anspruchs 1 oder 6 bzw. dem des Anspruchs 6 oder 14.

Bei Betonbauwerken mit sogenannten Wartungsfugen ist es z. B. bei Klärbecken, Löschwasserrückhaltebecken, Auffangräumen von Chemikalienlager, wegen des Grundwasserschutzes des Untergrundes, bei Brücken wegen der Qualitätsminderung des Spannbetons, usw. wichtig, dass die mit Dichtmaterial versehenen Fugen dicht bleiben. Um auszuschließen, dass eine Undichtigkeit zu einem größeren Schaden an der Konstruktion oder der Umwelt führt, kann es notwendig werden, dass die Dichtfugen von Zeit zu Zeit mit neuem Dichtmaterial versehen bzw. saniert werden, unabhängig davon, ob die Dichtigkeit nachgelassen hat oder nicht. Dies ist aufwendig. Auch wenn prophylaktisch sehr aufwendige und teuere Abdichtungssysteme installiert werden, kann damit letztendlich eine Undichtigkeit auch nicht völlig ausgeschlossen werden.

Aufgabe der vorliegenden Erfindung ist es deshalb, ein Verfahren und eine Einrichtung zum Prüfen bzw. Überwachen bzw. zur Alterungsverfolgung der Dichtigkeit von Fugen an Bauwerken der eingangs genannten Art vorzusehen, um vor dem Sanieren einer Fugenabdichtung oder vor dem erneuten Sanieren einer bereits sanierten Fugenabdichtung eine Entscheidung über die Sanierungsnotwendigkeit treffen zu können.

Zur Lösung dieser Aufgabe sind bei einem Verfahren bzw. einer Einrichtung der genannten Art die im Anspruch 1 oder 6 bzw. 6 oder 14 angegebenen Merkmale vorgesehen.

Durch die erfindungsgemäßen Maßnahmen ist es durch die Erfassung von Permeationsvorgängen in einfacher Weise möglich, die Dichtigkeit von abgedichteten Fugen qualitativ zu überprüfen, um so auf einfache Weise entscheiden zu können, ob eine Sanierung bzw. erneute Sanierung notwendig ist. Gleichzeitig kann anhand der Analyse und von Erfahrungswerten abgeschätzt werden, wann die betreffende überprüfte Fugenabdichtung zur Sanierung anstehen wird. Es wurde nämlich erkannt, dass ein Dichtwerkstoff auch im neuwertigen Zustand eine von Null verschiedene Permeabilität für verschiedene als Permeenten bezeichnete Stoffe aufweist. Die Permeabilität ist jedoch extrem gering; Permeenten werden im mikroskopischen Bild der Permeationsvorgänge nur im Spurenbereich in Form einzelner Moleküle durch einen neuwertigen Dichtwerkstoff hindurchgelassen. Dabei wird die Konzentration eines bestimmten Permeenten qualitativ oder quantitativ gemessen, welcher von einer Seite eines Dichtwerkstoffs, an den ein Prüfgas angrenzt, durch den Dichtwerkstoff hindurch zur Messkammerseite diffundiert ist. Die Messung findet auf dieser Messkammerseite statt. Dabei kann ein Zeitintervall nahezu konstanter Permeabilität des Dichtwerkstoffs ermittelt werden, welches einem Neuwertigkeitszustand des untersuchten Dichtwerkstoffs entspricht. Während dieses Neuwertigkeitszustands ist also insbesondere noch keine die Permeabilität beeinflussende Versprödung oder ein Materialabtrag feststellbar, Mikrorisse sowie eine Abnahme der Kompressionskräfte des Dichtwerkstoffs sind ebenfalls (noch) nicht festzustellen, auch sind noch keine Ablösungserscheinungen des Dichtwerkstoffs zum angrenzenden Dichtsitz erkennbar. Es werden also Informationen über einen zu untersuchenden Dichtwerkstoff oder ein Dichtelement lange vor einem makroskopischen Undichtwerden gewonnen. Somit besteht die Möglichkeit, in einem Langzeitversuch durch kontinuierliche Messung oder Messung in zeitlichen Abständen die Dauer dieses Neuwertigkeitszustands zu verfolgen bzw. zu messen.

Eine einfache Ausgestaltung der Messkammer ergibt sich durch die Merkmale nach Anspruch 9.

Bevorzugterweise sind die Merkmale des Anspruchs 2 bzw. 10 vorgesehen, um bei Messungen, die von Zeit zu Zeit stattfinden, eindeutige Analyseergebnisse zu erhalten.

Da es sich hier um eine Permeationsmessung handelt, ist es wesentlich, dass die Zuführung von Messgas nahezu drucklos erfolgen kann. Gemäß einem bevorzugten Ausführungsbeispiel sind hierzu die Maßnahmen nach Anspruch 3 bzw. 13 vorgesehen.

Weitere vorteilhafte Ausgestaltungen ergeben sich aus den Merkmalen einzelner oder mehrerer der weiteren Unteransprüche.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer Ansicht eine Einrichtung zum diskontinuierlichen Überprüfen der Dichtigkeit einer Bauteilfuge an einem Betonbauwerk gemäß einem ersten Ausführungsbeispiel vorliegender Erfindung;
- Figur 2: in schematischer perspektivischer Darstellung eine Einrichtung ähnlich der der Figur 1, jedoch zum überprüfen der Dichtigkeit einer bereits sanierten Trennfuge an einem Betonbauwerk gemäß einem anderen Ausführungsbeispiel vorliegender Erfindung und
- Figur 3: in schematischer Ansicht eine Einrichtung zum kontinuierlichen Überwachen der Dichtigkeit einer Bauteilfuge an einem Betonbauwerk gemäß einem weiteren Ausführungsbeispiel vorliegender Erfindung.

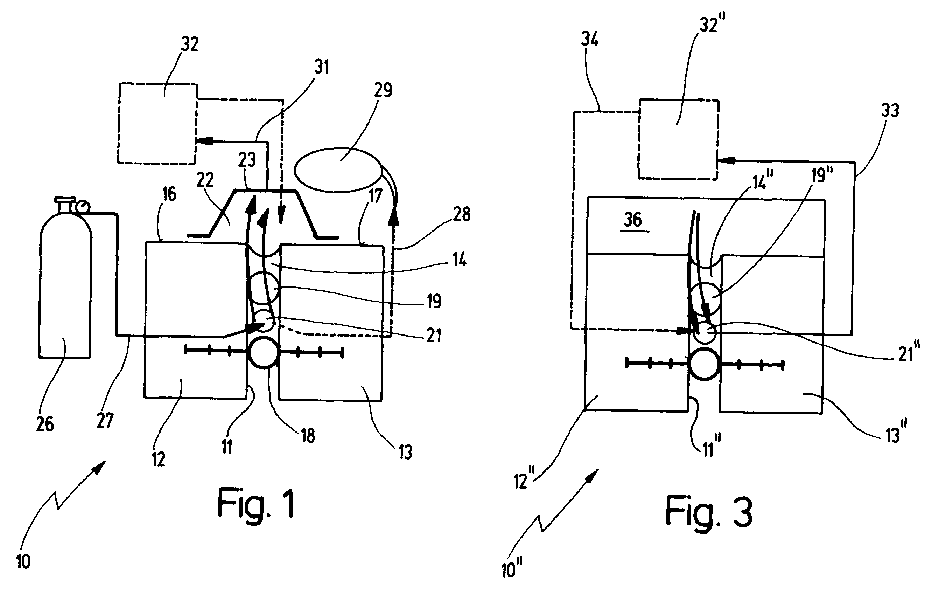

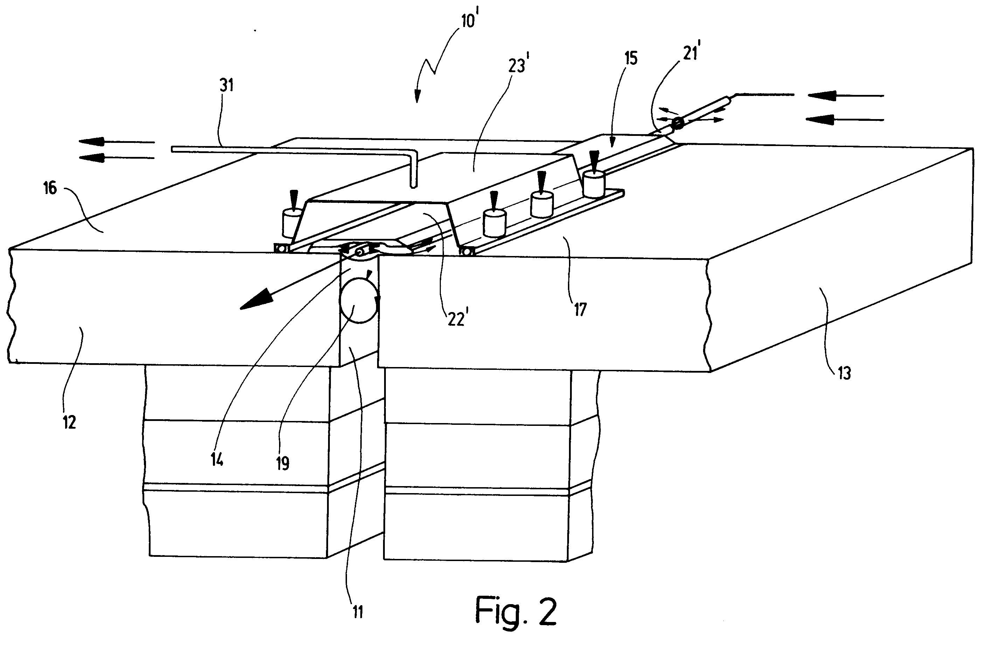

Die in den Figuren 1 und 2 dargestellte Einrichtung 10 bzw. 10' dient zum diskontinuierlichen Überprüfen der Dichtigkeit einer Bauteilfuge 11 zwischen zwei Betonplatten 12 und 13 eines Betonbauwerks, wie eines Gebäudes, einer Brücke, eines Beckens in beispielsweise abwassertechnischen Anlagen und dergleichen. Wenn auch die beiden Betonplatten 12 und 13 hier nebeneinander angeordnet dargestellt sind, versteht es sich, dass die Fuge auch in einem Eckbereich oder dergleichen sein kann. Die Fuge 11 ist mit einem handelsüblichen Dichtmaterial 14 in einem Bereich ausgefüllt, der der Außen- bzw. Oberfläche 16, 17 der beiden Betonplatten 12, 13 zugewandt ist. Dabei ist es wesentlich, dass das mit einer Hinterfüllung 19 versehene Dichtmaterial 14 die Fuge 11 vollständig verschließt, um beispielsweise bei Klärbecken Löschwasserrückhaltebecken oder Industriefußböden das Erdreich und das Grundwasser nicht zu verschmutzen und/oder bei Brückenfugen, Gebäudefugen und dergleichen eine Qualitätsverschlechterung des Spannbetons und Schäden bei Bauwerken durch Eindringen von Wasser zu verhindern.

Die in Figur 1 dargestellte Einrichtung 10 besitzt ein perforiertes Röhrchen 21, das unterhalb des Dichtmaterials 14 in der Fuge 11 angeordnet und in nicht dargestellter Weise gehalten ist. Das perforierte Röhrchen 21 ist bereits beim Herstellen der Fugenabdichtung eingebracht worden. Beispielsweise kann das Röhrchen 21 auf dem in Figur 1 dargestellten, in den beiden Betonplatten 12, 13 verankerten Fugenband 18 aufliegen bzw. an diesem oder der Hinterfüllung gehalten sein. Das perforierte Röhrchen 21 verläuft vorzugsweise über die gesamte Länge der Fuge 11 und ist an seinen beiden Enden in nicht dargestellter Weise zugänglich. Über der mit dem Dichtmaterial 14 versehenen Fuge 11 ist eine Messkammer 22 angeordnet, die bauwerkseitig von der Fuge 11 bzw. deren Dichtmaterial 14 und den angrenzenden Bereichen der Fläche 16, 17 der Betonplatte 12, 13 und obenseitig von einer kanalartigen Haube 23 begrenzt ist. Die Haube 23 verläuft über die gesamte Länge oder zumindest über denjenigen Abschnitt der Fuge 11, der auf Dichtigkeit hin überprüft werden soll. Die kanalartige Haube 23 ist in Figur 1 in nicht dargestellter Weise dichtend auf der Fläche 16, 17 der Betonplatte 12, 13 aufgesetzt.

Zum Überprüfen der Dichtigkeit der Fuge 11 ist das perforierte Röhrchen 21 mit seinem einen Ende über eine Leitung 27 mit einer Prüfgasquelle in Form einer Prüfgasflasche 26 verbunden. Das andere Ende des perforierten Röhrchens 21 kann entweder verschlossen sein oder ist, wie in Figur 1 dargestellt, über eine Rohrleitung 28 mit einem Gassack 29 verbunden. Die Messkammer 22 ist über eine Leitung 31 bzw. im Closed-Loop-Betrieb über zwei Leitungen mit einer Prüfgasanalysevorrichtung 32 verbunden.

Zum Überprüfen der Dichtigkeit der Fuge 11 wird das perforierte Röhrchen 21 mit dem Prüfgas aus der Prüfgasflasche 26 gefüllt. Nach einem mehrminütigen, (beispielsweise 5 Minuten) Ruhezustand wird mit Hilfe der Prüfgasanalysevorrichtung 32 gemessen, ob aus den Perforierungen des perforierten Röhrchens 21 austretendes Prüfgas aufgrund Permeation oder fehlender Flankenhaftung oder Risse durch das Dichtmaterial 14 in die Messkammer 22 gelangt ist. Außer dieser quantitativen Analyse kann auch eine qualitative Analyse hinsichtlich des Permeationsverlaufs, der Permeationsgeschwindigkeit und dergleichen durchgeführt werden. Das Zuführen des Prüfgases in das perforierte Röhrchen 21 erfolgt nahezu drucklos, vorzugsweise bei einem Druck von kleiner als 0,1 bar.

Figur 2 zeigt eine Darstellung, bei der die Einrichtung 10' zum Überprüfen der Dichtigkeit einer Trennfuge bei einer bereits sanierten Fuge 11 eingesetzt wird. Wie beim Ausführungsbeispiel der Figur 1 ist die zwischen Betonplatten 12, 13 vorhandene Fuge 11 mit einem Dichtmaterial 14 ausgefüllt. Da dieses Dichtmaterial 14 bereits undicht war, wurde die Fuge 11 z.B. dadurch saniert, dass über sie brückenartig hinweg ein flächiges Dichtmaterial in Form eines elastischen Dichtungsbandes 15 gelegt wurde, das auf den angrenzenden Bereichen 16, 17 der Betonplatten 12, 13 durch Kleben oder dergleichen befestigt ist. Beim Sanieren wurde auf das Dichtungsmaterial 14 aber unter das Dichtungsband 15 ein perforiertes Röhrchen 21' über die entsprechende Länge der Fuge 11 eingelegt.

Entsprechend Figur 1 ist auch hier eine Messkammer 22' vorgesehen, die von einer kanalartigen Haube 23' abgedeckt ist, die, wie zu Figur 1 beschrieben, über den betreffenden Abschnitt der Fuge 11 randseitig und endseitig abdichtend auf die Betonplatten 12, 13 gebracht ist.

Bei diesem Ausführungsbeispiel wird vor dem Überprüfen der Dichtigkeit der Fuge 11 bzw. des Dichtungsbandes 15 mit Hilfe des genannten Prüfgases zunächst das perforierte Röhrchen 21' mit Hilfe eines von einer nicht dargestellten Quelle kommenden Trägergases, beispielsweise N₂, durchgespült. Entsprechendes gilt für die Messkammer 22', die ebenfalls zunächst mit einem Spülgas bzw. Trägergas beaufschlagt ist. Erst danach wird mit Hilfe des von einer nicht dargestellten Prüfgasquelle kommenden Prüfgases das zu Figur 1 beschriebene Überprüfungs- und Messverfahren durchgeführt. Auch bei dieser Ausführungsform werden Trägergas und Prüfgas nahezu drucklos, d. h. mit einem Druck von kleiner 0,1 bar eingebracht.

Figur 3 zeigt eine der Figur 1 entsprechende Darstellung einer Fuge 11'' zwischen zwei Betonplatten 12'' und 13'', wobei die Fuge durch Dichtmaterial 14'' im entsprechenden, oben beschriebenen Bereich ausgefüllt ist.

Die Einrichtung 10'' besitzt ein perforiertes Röhrchen 21'', das bei diesem Ausführungsbeispiel zum kontinuierlichen Überwachen der Dichtigkeit der Fuge 11 an seinen beiden Enden mit dem Eingang oder dem Ein- und Ausgang der Gasanalysevorrichtung 32'' über Leitungen 33, 34 verbunden ist. Bei diesem Ausführungsbeispiel wird quantitativ und/oder qualitativ überwacht, ob aus dem freien (z.B. Gase) oder gefüllten (z.B. Abwasser) Raum 36 oberhalb der Betonplatten 12, 13 bzw. der Fuge 11 durch Permeation Gas durch das Dichtmaterial 14'' dringt und in das perforierte Röhrchen 21'' gelangt. Aus dem perforierten Röhrchen 21 wird gereinigte Luft oder ein anderes eingeleitetes Trägergas in die Gasanalysevorrichtung 32'' gebracht, in der Luft bzw. dem Trägergas möglicherweise enthaltenes, aus dem Raum 36 durchdiffundiertes Gas gemessen und analysiert wird. Mit dem Einbau eines derartigen perforierten Röhrchens 21'' kann eine kontinuierliche Betriebsüberwachung der Dichtigkeit der Fuge 11'' vorgenommen werden. Es versteht sich, dass dies in entsprechender Weise auch bei einer nach Figur 2 bereits sanierten Fuge erfolgen kann.

Bei den eingangs beschriebenen Fugen kann es sich nicht nur um Bauteilfugen sondern auch um Anschlußfugen, Trennfugen, Wartungsfugen u.dgl. handeln. Der mit den Fugen versehene Untergrund kann eine Beton-, keramische, versiegelte Oberfläche o.dgl. besitzen.

Mit der Permeationsanalyse kann der Alterungsverlauf eines Dichtwerkstoffs verdeutlicht und ermittelt werden. Der Beginn einer Zeitachse bezeichnet den Startzeitpunkt bei der Durchführung des erfindungsgemäßen Verfahrens; es wird sich hierbei üblicherweise um denjenigen Zeitpunkt handeln, zu dem die Prüfseite des Dichtwerkstoffs erstmals mit dem Prüfmedium beaufschlagt wird. Es wird dann kontinuierlich oder in zeitlichen Abständen die Konzentration des Permeenten (Prüfgases) auf der von der Prüfseite des Dichtwerkstoffs abgewandten Messkammerseite gemessen. Die Konzentration wird in der ersten Phase ansteigen und sich in der zweiten Phase auf einen im Wesentlichen konstanten Wert stabilisieren. Es besteht die Möglichkeit, den Durchstoßzeitpunkt durch Extrapolation der Messwerte zu bestimmen. Es handelt sich hierbei um denjenigen Zeitpunkt, zu dem mikroskopisch gesehen idealerweise das erste Teilchen oder Molekül des Permeenten den Dichtwerkstoff in Richtung auf die Messkammerseite durchdrungen hat. Ein Zeitpunkt t2 markiert den Übergang von einer ersten zu einer zweiten Phase, in der die Konzentration auf der Messkammerseite im Wesentlichen konstant ist oder mit konstanter Rate leicht zunimmt. In dieser zweiten Phase ist die Permeabilität des Dichtwerkstoffs für den Permeenten konstant. Der Dichtwerkstoff befindet sich in seinem Neuwertigkeitszustand. Es besteht nicht die Gefahr, dass makroskopisch wahrnehmbare Leckagen auftreten. Diese zweite Phase kann sich, wenn Langzeitmessungen durchgeführt und betriebsähnliche Zustände simuliert werden, also nicht durch extreme Randbedingungen eine vorzeitige Alterung eines Dichtwerkstoffs herbeigeführt wird, über eine sehr lange Zeit, möglicherweise über Jahre hinweg erstrecken. Es ist jedoch auch möglich, einen Langzeitversuch nach einer vorgegebenen Zeitspanne abzubrechen. Es kann dann als Versuchsergebnis zum Beispiel die Aussage gemacht werden, dass ein bestimmter Dichtwerkstoff unter bestimmten vorgegebenen Bedingungen im Hinblick auf Umgebungsmedium, Spannung, Temperatur, etc. seinen Neuwertigkeitszustand auch nach einer Zeitdauer T nach Versuchsbeginn nicht verlassen hat.

Bei Verfahren, die über die zweite Phase des Dichtwerkstoffs hinaus durchgeführt werden, wird zu einem im Laufe der Zeit erreichten Zeitpunkt t3 die Konzentration des Permeenten auf der Messkammerseite stark ansteigen, was auf eine Zunahme der Permeabilität des Dichtwerkstoffs für den Permeenten schließen lässt. Dies wiederum deutet auf eine Veränderung des Dichtwerkstoffs hin; es kann sich um Versprödung handeln oder um das Auftreten von Mikrorissen, die Kompressionskräfte innerhalb des Dichtwerkstoffs können abnehmen bis hin zum Verlust der Flankenhaftung, oder es kann zu einem Materialabtrag gekommen sein. Erfahrungsgemäß wird die Permeabilität und damit die Konzentration des Permeenten auf der Messkammerseite mit fortschreitender Zeit immer stärker zunehmen. Diese dritte Phase der zunehmenden Permeabilität ist dadurch gekennzeichnet, dass der Dichtwerkstoff zwar noch brauchbar ist - es treten noch keine makroskopisch wahrnehmbaren Leckagen auf - die Dichtigkeitsreserven des Dichtwerkstoffs werden jedoch vermindert, indem das Dichtungsgefüge zunehmend gestört ist und kleinere Anrisse zeigt, die jedoch in Folge noch ausreichender Kompression innerhalb des Dichtwerkstoffs ausreichend druckdicht sind.

Mit zunehmender Alterung werden geometrische und optische Veränderungen des Dichtwerkstoffs erkennbar, es kommt zu größeren Werkstoffveränderungen, die zum Teil noch reversibel sind. Schließlich wird bei einem Zeitpunkt t4 der Brauchbarkeitsbereich verlassen. Der Dichtwerkstoff befindet sich zu diesem Zeitpunkt t4 im Grenzbereich; er ist im drucklosen Zustand gerade noch dicht gegenüber flüssigen Medien, kann aber nicht mehr als druckdicht bezeichnet werden. Das Dichtungsgefüge ist stark gestört, es gibt größere Anrisse, Abplatzungen und Auflösungen. Auftretende Verformungen sind nicht mehr reversibel. Schließlich tritt zu einem Zeitpunkt t5 Leckage auf.

## Patentansprüche

1. Verfahren zum Prüfen bzw. Überwachen bzw. zur Alterungsverfolgung der Dichtigkeit von Fugen an Bauwerken, wie Gebäude, Brücken, Becken und dergleichen, welche Fugen im Bereich der Bauwerksaußen- bzw. - oberfläche mit einem ersten Dichtmaterial ausgefüllt oder mit einem die Fuge und das erste Dichtmaterial überbrückenden zweiten Dichtmaterial saniert sind, **dadurch gekennzeichnet**, dass die unterhalb des ersten oder zweiten Dichtmaterials mit einem perforierten Röhrchen versehene Fuge längs ihres zu prüfenden bzw. zu überwachenden Abschnitts von einer Messkammer überdeckt wird, dass durch das perforierte Röhrchen ein Prüfgas nahezu drucklos geführt und dass in der zur Fuge hin offenen Messkammer eine Prüfgas-Permeationsanalyse durchgeführt wird.

2. Verfahren nach Anspruch 1, dadurch gekennzeichnet, dass vor dem Zuführen von Prüfgas das perforierte Röhrchen und/oder die Messkammer mit einem Trägergas gespült wird.

3. Verfahren nach Anspruch 1 oder 2, dadurch gekennzeichnet, dass das Trägergas und/oder das Prüfgas bei einem geringen Druck von kleiner 0,1 bar in das Röhrchen eingebracht wird.

4. Verfahren nach mindestens einem der vorhergehenden Ansprüche, dadurch gekennzeichnet, dass nach dem Einbringen des Prüfgases in das perforierte Röhrchen vor dem Durchführen der Analyse eine Beruhigungszeit von einigen Minuten abgewartet wird.

5. Verfahren nach mindestens einem der vorhergehenden Ansprüche, dadurch gekennzeichnet, das das Verfahren diskontinuierlich durchgeführt wird.

6. Verfahren zum Prüfen bzw. Überwachen bzw. zur Alterungsverfolgung der Dichtigkeit von Fugen an Bauwerken, wie Gebäude, Brücken, Becken und dergleichen, welche Fugen im Bereich der Bauwerksaußen- bzw. oberfläche mit einem ersten Dichtmaterial ausgefüllt oder mit einem die Fuge und das erste Dichtmaterial überbrückenden zweiten Dichtmaterial saniert sind, dadurch gekennzeichnet, dass ein unterhalb des ersten oder zweiten Dichtmaterials verlaufendes perforiertes Röhrchen längs des zu prüfenden bzw. zu überwachenden Abschnitts als Messkammer verwendet wird, in der eine Prüfgaspermeationsanalyse durchgeführt wird.

7. Verfahren nach Anspruch 6, dadurch gekennzeichnet, dass das Verfahren kontinuierlich durchgeführt wird.

8. Einrichtung zum Prüfen bzw. Überwachen bzw. der Alterungsverfolgung der Dichtigkeit von Fugen an Bauwerken, wie Gebäude, Brücken, Becken und dergleichen, welche Fugen im Bereich der Bauwerksaußen- bzw. - oberfläche mit einem ersten Dichtmaterial ausgefüllt oder mit einem die Fuge und das erste Dichtmaterial überbrückenden zweiten Dichtmaterial saniert sind, gekennzeichnet durch ein unterhalb des ersten oder des zweiten Dichtmaterials (14, 15) längs zumindest eines Teils des Fugenverlaufs verlegtes perforiertes Röhrchen (21), durch eine über den zu prüfenden bzw. zu überwachenden Fugenbereich (11) an der Bauwerksaußen- bzw. -oberfläche (16, 17) angeordnete und mit dem Fugenbereich (11) in Verbindung stehende Messkammer (22) und durch eine Messanordnung aus einer mit dem Röhrchen (21) verbundenen Prüfgasquelle (26) und einer mit der Messkammer (22) verbundenen Prüfgasanalysevorrichtung (32).

9. Vorrichtung nach Anspruch 8, dadurch gekennzeichnet, dass die Messkammer von einer kanalartig profilierten Haube (23) gebildet ist, die auf die Bauwerksaußen- bzw. - oberfläche im Fugenbereich (11) dichtend aufgelegt ist.

10. Einrichtung nach Anspruch 8 oder 9, dadurch gekennzeichnet, dass eine Spülgasquelle vorgesehen ist.

11. Einrichtung nach mindestens einem der Ansprüche 8 bis 10, dadurch gekennzeichnet, dass das eine Ende des perforierten Röhrchens (21) mit der Prüfgas- und/oder Spülgasquelle verbindbar ist.

12. Einrichtung nach mindestens einem der Ansprüche 8 bis 11, dadurch gekennzeichnet, dass das andere Ende des perforierten Röhrchens (21) mit einem Gassack (29) verbindbar ist.

13. Einrichtung nach mindestens einem der Ansprüche 8 bis 12, dadurch gekennzeichnet, dass das Prüfgas unter einem geringen Druck von kleiner 0,1 bar ansteht.

14. Einrichtung zum Prüfen bzw. Überwachen bzw. der Alterungsverfolgung der Dichtigkeit von Fugen an Bauwerken, wie Gebäude, Brücken, Becken und dergleichen, welche Fugen im Bereich der Bauwerksaußen- bzw. oberfläche mit einem ersten Dichtmaterial ausgefüllt oder mit einem die Fuge und das erste Dichtmaterial überbrückenden zweiten Dichtmaterial saniert sind, gekennzeichnet durch ein unterhalb des ersten oder des zweiten Dichtmaterials (14, 15) längs zumindest eines Teils des Fugenverlaufs verlegtes perforiertes Röhrchen (21), mit dem Fugenbereich (11) in Verbindung stehende Messkammer (22) und durch eine Messanordnung aus einer durch das Röhrchen (21) gebildeten Messkammer (22) und einer mit der Messkammer (22) verbundenen Prüfgasanalysevorrichtung (32).
